# EUROPEAN PATENT SPECIFICATION

(11) **EP 2 593 399 B1**
(45) Date of publication and mention of the grant of the patent: **11.06.2014**
(21) Application number: 11739149.0
(22) Date of filing: 13.07.2011
(51) Int. Cl.: B67D 7/02

(54) **A PORTABLE HANDHELD LIQUID DISPENSER**
TRÄGBARES HANDGERÄT ZUM SPENDEN EINER FLÜSSIGKEIT
DISTRIBUTEUR MANUEL DE LIQUIDES PORTATIF

(30) Priority: 16.07.2010 GB 201011998
(43) Date of publication of application: 22.05.2013
(73) Proprietor: Packaging Innovation Limited, London W11 2AR (GB)
(72) Inventor: O'Brien, Michael Gerard, Rickmansworth Hertfordshire WD3 9UH (GB)
(74) Representative: Fitchett, Stuart Paul
(86) International application number: PCT/GB2011/051312
(87) International publication number: WO 2012/007752

(56) References cited:
- WO-A1-94/15516
- FR-A- 548 655

## Description

The present invention relates to portable handheld liquid dispenser for dispensing multiple doses of a predetermined quantity of a liquid concentrate and particularly, but not exclusively, to a portable handheld liquid dispenser suitable for industrial application.

There is a need for a compact liquid dispenser suitable for dispensing relatively large volumes of concentrate in predetermined quantities to receptacles, such as buckets or bottles for subsequent dilution, particularly in industrial applications where the dispenser may be used repetitively.

WO 94/15516 discloses a known type of portable handheld liquid dispenser for dispensing single or multiple doses of a predetermined quantity of a liquid concentrate, the dispenser comprising a housing and a replaceable unit, the housing comprising: a compartment for receiving the replaceable unit; a handle mounted to the top of the housing, the handle comprising a fixed portion and a moveable actuator portion arranged relative to the fixed portion so that a hand carrying the dispenser by the handle can move the actuator portion relative to the fixed portion, the replaceable unit comprising: a reservoir for the liquid concentrate; a liquid outlet. According to the present invention the replaceable unit further comprises a pump for dispensing predetermined quantities of liquid from the reservoir through the outlet, and a linkage mechanism for transferring movement of the actuator portion to the pump of the replaceable unit when installed in the compartment.

A dispenser in accordance with the present invention may provide a relatively robust housing for receiving the replaceable unit, which may be a relatively flimsy refill pack, where for example the reservoir may be a collapsible plastic walled container or similar. The provision of the pump on the replaceable unit ensures that the correct predetermined quantity, or dose, is dispensed by the pump for the strength of the concentrate supplied with the pump, with the pump and concentrate having been matched by the supplier. Also the provision of the pump in the replaceable unit permits the housing to comprise only a minimum of components, which may be relatively simple in nature, with the more complex components, and thus those most likely to fail contained within the pump of the replaceable unit. Any failure of the pump can then be addressed by simply replacing the replaceable unit with a different replaceable unit. The replaceable units typically being disposable.

Concentrate may be relatively dense and the concentrate in the disposable container may be weigh in excess of 1.5 Kg. The provision of the handle on top of the housing makes the dispenser particularly easy to lift, because the dispenser can be raised and set down without having to alter the orientation of the dispenser. Furthermore, by having a moveable actuator portion as part of the handle, the dispenser can be actuated without having to reorientate the dispenser, thus the dispenser may be carried vertically by a person with their arm extending vertically downwards to its maximum extent, a position in which the arm is capable of carrying a load for a maximum period at a time. In this position the dispenser can be actuated by the hand carrying the dispenser, without the need to either put the dispenser down or to reorientate the dispenser prior to dispensing.

Preferably, the liquid outlet is located at the bottom of the dispenser when the replaceable unit is correctly located in the housing, thereby liquid can be dispensed downwardly into a receptacle, such as a bucket, when the dispenser is held vertically above the bucket.

Preferably, the bottom of the dispenser is arranged to permit the dispenser to be stood upright on a flat surface and thereby the dispenser can be picked up and set down without having to reorientate the dispenser, avoiding unnecessary strain that might otherwise occur on the wrist of the operator.

Preferably, the dispenser has a generally flat base portion in which the outlet is located, whereby the outlet may extend to an aperture through the base portion or extend through the base portion.

Preferably, the actuator portion of the handle has a linear portion arranged substantially parallel and adjacent to a linear portion of the fixed portion of the handle, wherein the actuator portion is operated and liquid dispensed by squeezing the handle.

Squeezing of the handle may be accomplished by use of all the finger and therefore a significant force may be exerted on the linkage mechanism whilst still carrying the dispenser.

Advantageously, the actuator portion is located below the fixed portion and is resiliently biased downwardly away from the fixed portion. The dispenser may thus be arranged so that a large proportion of the weight of the dispenser is supported by the actuator portion and the resilient means. The weight of the dispenser itself can then be used to assist the dispensing actuation by 'bouncing' the dispenser so that, as the dispenser come to an end of a downward projector, the actuator portion of the handle is raised towards the fixed portion by the action of both gravity and momentum pulling the fixed portion of the handle down whilst the actuator portion is raised relative to the fixed portion by the operator.

The dispenser may comprise a lock arranged to be locked and released by a hand carrying the dispenser by the handle, the lock, when engaged, preventing operation of the actuator portion. This permits the dispenser to be carried by the handle and the actuator portion, whilst ensuring the actuator portion is not accidently activated by an operator carrying the dispenser at least in part by the actuator portion of the handle.

Preferably, the replaceable unit and housing are arranged so that the replaceable unit is retained in the housing in an upright position, with the pump located below the reservoir between the reservoir and the outlet, with the outlet formed by an opening in the base of the dispenser.

This permits the pump to be self-priming with the liquid flowing into the pump by means of gravity. It also minimises the requirement for any pipe work extending between the pump and the outlet and thus it minimises the residual amount of liquid left in the outlet after the pump has completed its dispensing cycle. This reduces subsequent seepage and thus spillage, whilst also ensuring the correct dosage is achieved on both the present and subsequent cycle.

Preferably, the pump comprises a first part fixed relative to the reservoir and a second part fixed relative to the outlet, the pump being arranged such that relative movement between the two parts of the pump to a maximum extent permissible by the pump causes the predetermined quantity of liquid to be dispensed through the outlet.

Advantageously, the first part of the pump comprises engagement means for engaging with a fixed point of the housing and the second part of the pump comprises an engagement means for engaging with the linkage mechanism or alternatively the first part of the pump comprises engagement means for engaging with the linkage mechanism and the second part of the pump comprises engagement means for engaging with a fixed point of the housing.

The linkage mechanism may comprise two vertical legs extending downwardly from two opposite ends of the actuator portion of the handle, the legs being vertically slidable relative to respective sides of the housing and being connected at their lower ends to a base plate, the base plate being connected to one part of the pump and arranged to raise that part relative to the other part of the pump on operation of the actuator portion of the handle.

The above arrangement may provide a particularly balanced and compact arrangement for the dispenser.

The outlet may be located in the base of the dispenser so that liquid may be dispensed downwardly from the base of the dispenser, the base of the dispenser further comprising mounting means for receiving a neck of a container and for supporting the container by the neck whilst liquid is dispensed into the container from the dispenser. Thus the dispenser may be used for dosing both buckets, sinks and like receptacles and narrow necked containers such as bottles or jars.

One example of the present invention will now be described, by way of example only, with reference to the accompanying figures, of which:
Figure 1 is a perspective view of a dispenser in accordance with the present invention;
Figure 2 illustrates the housing of the dispenser of Figure 1 in an open position for receiving a replaceable unit;
Figure 3 is a front elevation showing the replaceable unit supported in the housing of the dispenser of Figure 1;
Figure 4 illustrates the operation of the dispenser as shown in Figure 3;
Figure 5 illustrates how the dispenser may be used to dispense a predetermined quantity of fluid to a bottle; and
Figure 6 illustrates how the dispenser of Figure 1 may be used to dispense a predetermined quantity of fluid to a bucket.

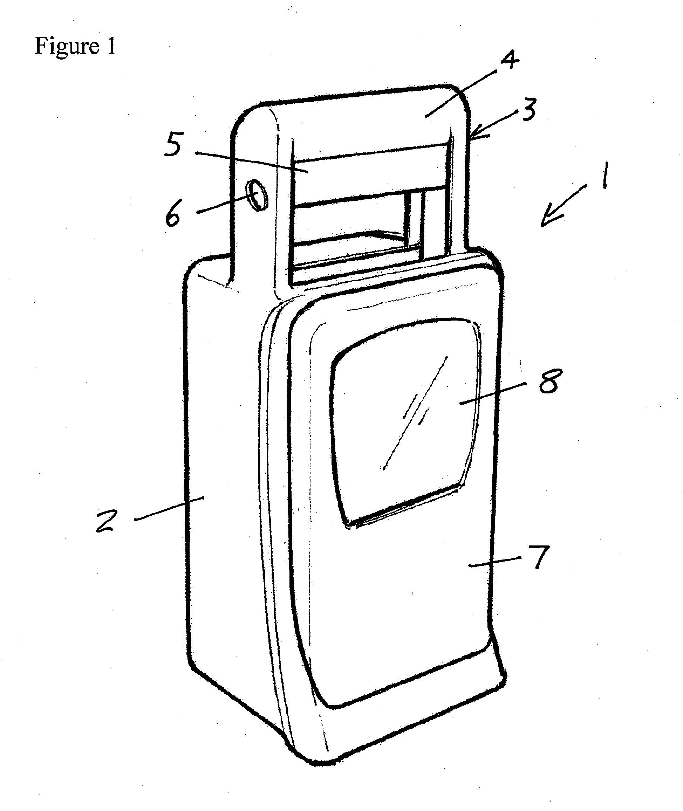

Referring to Figure 1, a dispenser 1 in accordance with the present invention comprises a housing 2 having a handle 3 at the top thereof. The handle 3 comprises a fixed portion 4, an actuator portion 5 and a lock 6.

The front of the housing 2 has a door 7 with a window 8 in it. The housing is made of plastics material with a clear window 8.

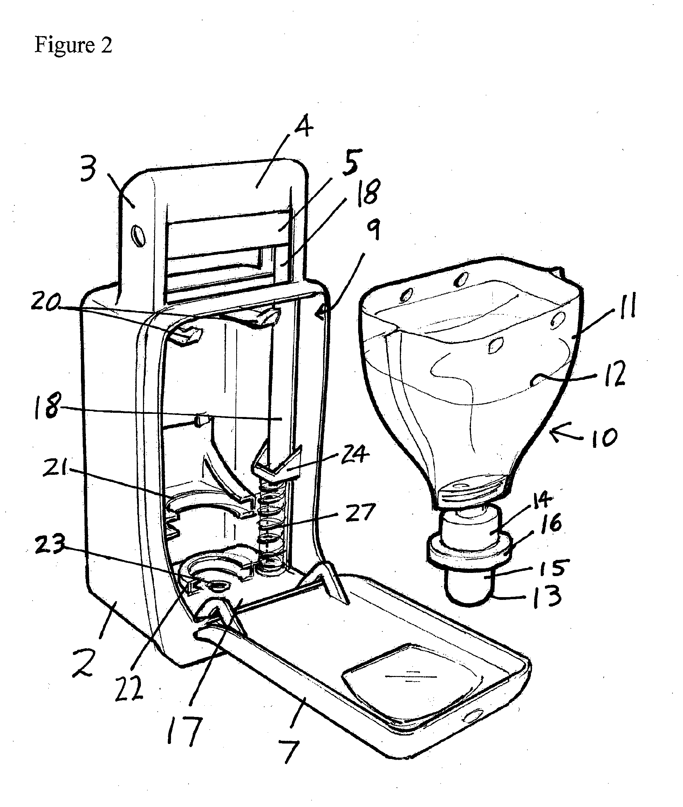

Referring now to Figure 2, the housing 2 is shown with the door 7 open exposing compartment 9 within the housing for receiving a replaceable and disposable unit 10. The replaceable unit comprises a polythene collapsible reservoir 11 containing a liquid concentrate 12 to be dispensed through outlet 13 of the replaceable unit via pump 14, 15. The pump comprises a first part 14 and a second part 15 which also includes the outlet 13. The first part 15 of the pump has a collar 16 fixed relative thereto.

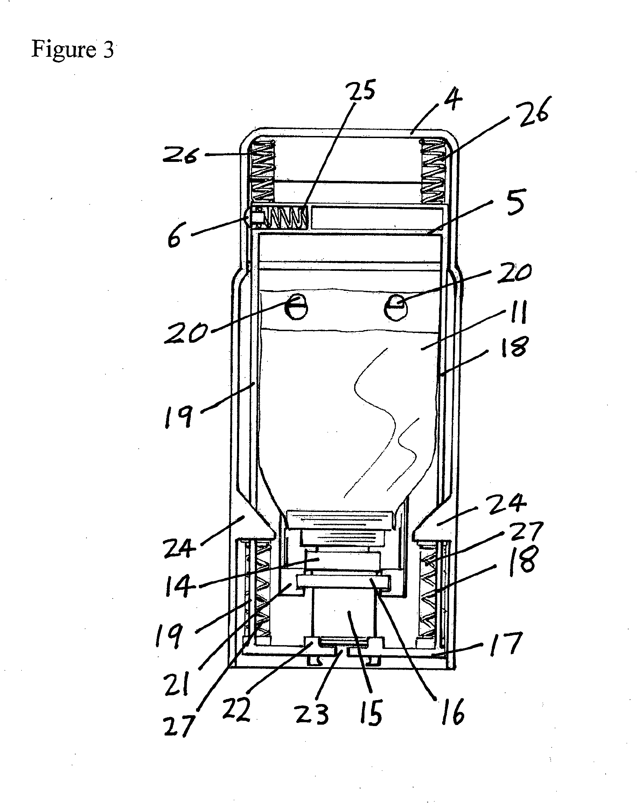

The housing 2 inside the compartment 9 has a base plate 17 supported by leg 18 and leg 19 (not shown in Figure 2) which are attached at the bottom ends to base plate 17 and which are attached at their top ends to the actuator portion 5 of the handle 3. This can be seen more clearly with reference to Figure 3.

The compartment additionally comprises two supports 20 for supporting the reservoir 11 of the replaceable unit 10. The compartment also comprises a fixing 21 for receiving the collar 16 of the first part 14 of the pump and retaining it in place. The base plate 17 has a locator 22 receiving the outlet 13 of the second part 15 of the pump and ensuring this is located above aperture 23 in the base plate 17. The sidewalls of the housing have guides 24 for permitting the legs 18 and 19 to slide vertically there through. The base plate 17 is biased in a downward portion by pair of springs 26 acting between the fixed portion 4 and actuator portion 5 of the handle 3 (see Figure 3) and by the pair of springs 27 acting between the base plate 17 and the guides 24.

Referring particularly now to Figure 3, the replaceable unit 10 is shown located in the housing 2 supported by the supports 20.

The handle is shown locked in place by the lock 6, biased by spring 25 engaging with the housing 2. The pump is extended to a maximum by being internally biased downwards so that the collar 16 of the first part 14 of the pump is held in place relative to the housing 2 by the fixing 21, with the second part 16 of the pump retained in place by the locator 22 in the base plate 17.

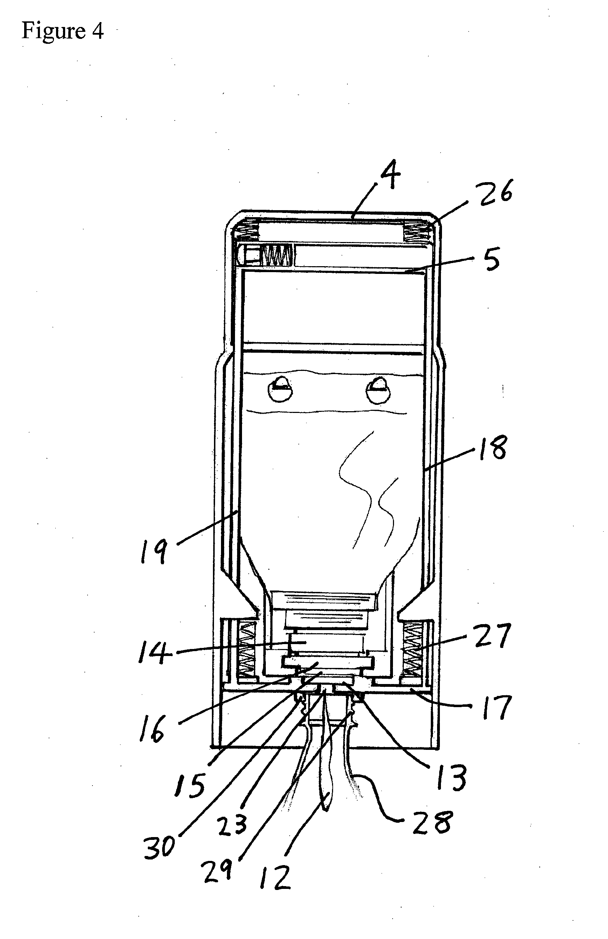

Referring now to Figure 4, here the lock 6 is depressed and the handle 3 squeezed so that the actuator portion 5 is raised relative to the fixed portion 4, raising the legs 18 and 19 and thus the base plate 17 against the action of the springs 26 and 27. This causes the second part 15 of the pump to be raised relative to the first part 14 of the pump, compressing the pump and causing a fixed amount of the concentrate 12 to be dispensed through outlet 13 and aperture 23 into a bottle 28. The bottle 28 is retained in place by the neck 29 of the bottle engaging with a mounting 30 on the bottom of base plate 17.

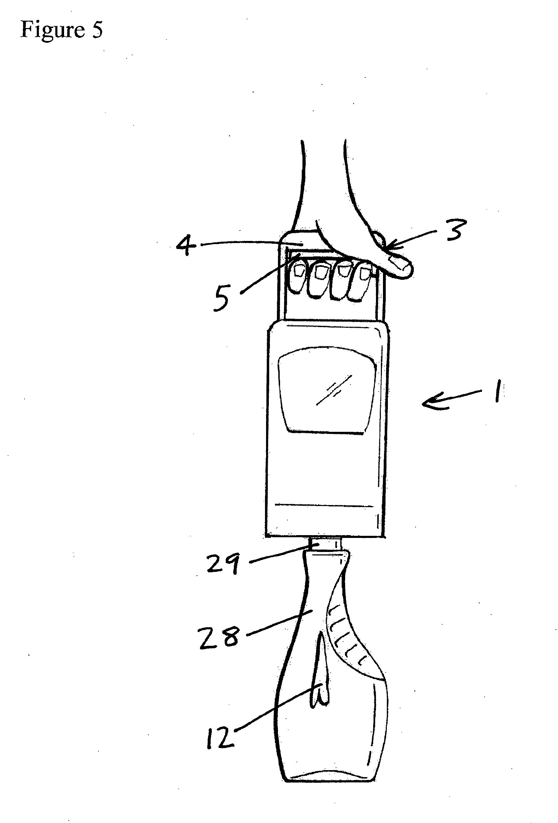

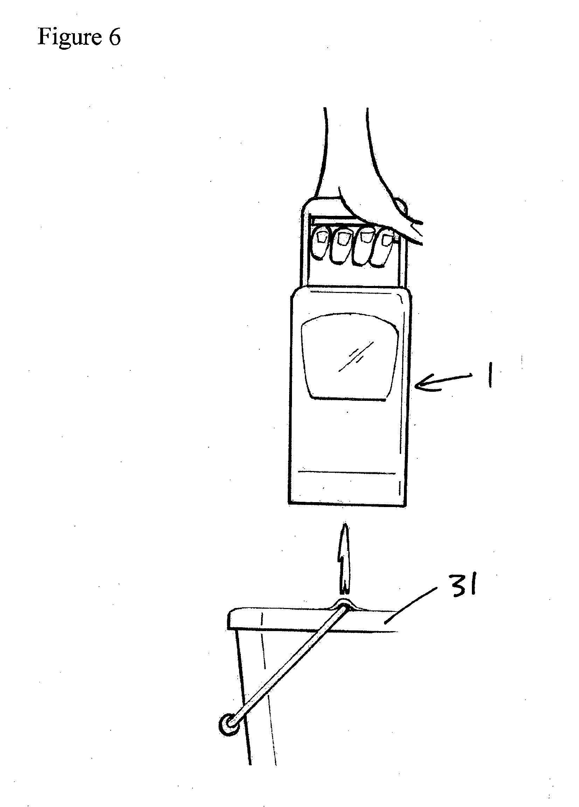

Referring to Figure 5, the dispenser is shown in use whereby it is supported vertically by a hand carrying the handle 3. The bottle 28 is retained by the neck 29 to the base of the dispenser 1 and the dispenser is raised and lowered. The dispensers downward movement is terminated by the hand reaching its fully extend downward position, whereupon the fingers of the hand exert an upward force on the actuator portion 5 of the handle 3. This causes the actuator portion 5 to be raised relative to the fixed portion 4 and a predetermined quantity of concentrate 12 is dispensed into the bottle 28. Thus, the operation of the dispenser 1 is assisted by gravity and downward momentum of the dispenser causing the actuator portion 5 of the handle to be raised. In Figure 6, the dispenser 1 is shown dispensing a predetermined quantity of concentrate 12 into a bucket 31 in the same manner as the concentrate is dispensed into the bottle 28 of Figure 5.

The pump 4 can be arranged to dispense a predetermined quantity of fluid depending on the quantity required for the particular concentrate in the reservoir 11 of the replaceable unit 10.

One embodiment of the present invention has been described above by way of example only and it will be appreciated that alternative arrangements are possible within the scope of the appended claims.

## Claims

1. A portable handheld liquid dispenser (1) for dispensing single or multiple doses of a predetermined quantity of a liquid concentrate (12), the dispenser comprising a housing (3) and a replaceable unit (10),
the housing (2) comprising:
a compartment (9) for receiving the replaceable unit (10);
a handle (3) mounted to the top of the housing, the handle comprising a fixed portion and a moveable actuator portion (5)arranged relative to the fixed portion so that a hand carrying the dispenser (1) by the handle can move the actuator portion relative to the fixed portion,
the replaceable unit (10) comprising:
a reservoir (11) for the liquid concentrate (12); and
a liquid outlet (13),
the liquid dispenser being **characterised in** the replaceable unit further comprising:
a pump (14, 15) for dispensing a predetermined quantity of liquid from the reservoir through the outlet and in the liquid dispenser further comprising a linkage mechanism (17, 18, 19) for transferring movement of the actuator portion (5) to the pump (14, 15) of the replaceable unit when installed in the compartment of the housing.

2. A dispenser as claimed in Claim 1, wherein the liquid outlet (13) is located at the bottom of the dispenser (1) when the replaceable unit (10) is correctly located in the housing.

3. A dispenser as claimed in Claim 2, wherein the bottom of the dispenser (1) is arranged to permit the dispenser to be stood upright on a flat surface.

4. A dispenser as claimed in Claim 3, wherein the dispenser (1) has a generally flat base portion in which the outlet (13) is located.

5. A dispenser as claimed in any preceding claim, wherein the actuator portion (5) of the handle (3) has a linear portion arranged substantially parallel and adjacent to a linear portion of the fixed portion of the handle, wherein the actuator portion is operated and liquid dispensed by squeezing the handle (3).

6. A dispenser as claimed in Claim 5, wherein the actuator portion (5) is located below the fixed portion (4) and is resiliently biased downwardly away from the fixed position.

7. A dispense as claimed in any preceding claim, comprising a lock (6) arranged to be locked and released by a hand carrying the dispenser by the handle, the lock, when engaged, preventing operation of the actuator portion (5).

8. A dispenser as claimed in any preceding claim, wherein the replaceable unit (10) and housing (2) are arranged so that the replaceable unit is retained in the housing in an upright position, with the pump (14, 15) located below the reservoir between the reservoir and the outlet, with the outlet formed by an opening in the base of the dispenser.

9. A dispenser as claimed in any preceding claim, wherein the pump comprises a first part (14) fixed relative to the reservoir and a second part (15) fixed relative to the outlet and arranged such that relative movement between the two parts of the pump to a maximum extent permissible by the pump causes a predetermined quantity of liquid (12) to be dispensed through the outlet.

10. A dispenser as claimed in Claim 9, wherein the first part (14) of the pump comprises engagement means (16) for engaging with a fixed point (21) of the housing and the second part of the pump comprises an engagement means (22) for engaging with the linkage mechanism (17, 18, 19), or the first part of the pump comprises engagement means for engaging with the linkage mechanism and the second part of the pump comprises engagement means for engaging with a fixed point of the housing.

11. A dispenser as claimed in Claim 10, wherein the linkage mechanism comprises two vertical legs (18, 19) extending downwardly from two opposite ends of the actuator portion (5) of the handle (3), the legs being vertically slidable relative to respective sides of the housing (2) and being connected at their lower ends to a base plate (17), the base plate being connected to one part of the pump and arranged to raise that part relative to the other part of the pump on operation of the actuator portion of the handle.

12. A dispenser as claimed in any preceding claim, wherein the outlet (13) is located in the base of the dispenser (1) so that liquid (12) may be dispensed downwardly from the base of the dispenser, the base of the dispenser further comprising mounting means (30) for receiving a neck (29) of a container (28) and for supporting the container by the neck whilst liquid is dispensed into the container from the dispenser.

## Patentansprüche

1. Tragbarer Hand-Flüssigkeitsspender (1) zum Spenden einzelner oder mehrerer Dosen einer vorherbestimmten Menge eines Flüssigkeitskonzentrats (12), wobei der Spender ein Gehäuse (3) und eine auswechselbare Einheit (10) umfasst,
wobei das Gehäuse (2) Folgendes umfasst:
ein Fach (9) zum Aufnehmen der auswechselbaren Einheit (10);
einen oben an dem Gehäuse angebrachten Griff (3), wobei der Griff einen festen Abschnitt und einen beweglichen Betätigungsabschnitt (5) umfasst, der derart relativ zu dem festen Abschnitt angeordnet ist, dass eine den Spender (1) am Griff tragende Hand den Betätigungsabschnitt relativ zu dem festen Abschnitt bewegen kann,
wobei die auswechselbare Einheit (10) Folgendes umfasst:
einen Behälter (11) für das Flüssigkeitskonzentrat (12); und
einen Flüssigkeitsauslass (13),
wobei der Flüssigkeitsspender **dadurch gekennzeichnet ist, dass** die auswechselbare Einheit weiter Folgendes umfasst:
eine Pumpe (14, 15) zum Spenden einer vorherbestimmten Menge an Flüssigkeit aus dem Behälter durch den Auslass, und dadurch, dass der Flüssigkeitsspender weiter einen Kopplungsmechanismus (17, 18, 19) zum Übertragen von Bewegung des Betätigungsabschnitts (5) auf die Pumpe (14, 15) der auswechselbaren Einheit, wenn sie im Fach des Gehäuses eingebaut ist, umfasst.

2. Spender nach Anspruch 1, wobei sich der Flüssigkeitsauslass (13) am Boden des Spenders (1) befindet, wenn sich die auswechselbare Einheit (10) richtig in dem Gehäuse befindet.

3. Spender nach Anspruch 2, wobei der Boden des Spenders (1) dazu angeordnet ist, zuzulassen, dass der Spender aufrecht auf eine ebene Oberfläche gestellt wird.

4. Spender nach Anspruch 3, wobei der Spender (1) einen allgemein ebenen Basisabschnitt aufweist, in dem sich der Auslass (13) befindet.

5. Spender nach einem der vorangehenden Ansprüche, wobei der Betätigungsabschnitt (5) des Griffs (3) einen linearen Abschnitt aufweist, der im Wesentlichen parallel zu und benachbart einem linearen Abschnitt des festen Abschnitts des Griffs angeordnet ist, wobei der Betätigungsabschnitt betätigt und Flüssigkeit gespendet wird, indem der Griff (3) gedrückt wird.

6. Spender nach Anspruch 5, wobei sich der Betätigungsabschnitt (5) unterhalb von dem festen Abschnitt (4) befindet und elastisch nach unten von der festen Stellung weg vorgespannt ist.

7. Spender nach einem der vorangehenden Ansprüche, umfassend eine Verriegelung (6), die dazu angeordnet ist, von einer den Spender am Griff tragenden Hand verriegelt und freigegeben zu werden, wobei die Verriegelung, wenn sie sich im Eingriff befindet, die Betätigung des Betätigungsabschnitts (5) verhindert.

8. Spender nach einem der vorangehenden Ansprüche, wobei die auswechselbare Einheit (10) und das Gehäuse (2) derart angeordnet sind, dass die auswechselbare Einheit in einer aufrechten Lage in dem Gehäuse gehalten wird, wobei sich die Pumpe (14, 15) unterhalb von dem Behälter zwischen dem Behälter und dem Auslass befindet, wobei der Auslass durch eine Öffnung in der Basis des Spenders gebildet wird.

9. Spender nach einem der vorangehenden Ansprüche, wobei die Pumpe einen ersten Teil (14), der relativ zu dem Behälter fest ist und einen zweiten Teil (15), der relativ zu dem Auslass fest ist, umfasst und derart angeordnet ist, dass Relativbewegung zwischen den zwei Teilen der Pumpe bis zu einem maximalen von der Pumpe zulässigen Ausmaß bewirkt, dass eine vorherbestimmte Menge an Flüssigkeit (12) durch den Auslass gespendet wird.

10. Spender nach Anspruch 9, wobei der erste Teil (14) der Pumpe Eingriffsmittel (16) umfasst, um mit einer festen Stelle (21) des Gehäuses in Eingriff zu treten und der zweite Teil der Pumpe ein Eingriffsmittel (22) umfasst, um mit dem Kopplungsmechanismus (17, 18, 19) in Eingriff zu treten, oder der erste Teil der Pumpe Eingriffsmittel umfasst, um mit dem Kopplungsmechanismus in Eingriff zu treten und der zweite Teil der Pumpe Eingriffsmittel umfasst, um mit einer festen Stelle des Gehäuses in Eingriff zu treten.

11. Spender nach Anspruch 10, wobei der Kopplungsmechanismus zwei vertikale Schenkel (18, 19) umfasst, die sich von zwei gegenüberliegenden Enden des Betätigungsabschnitts (5) des Griffs (3) nach unten erstrecken, wobei die Schenkel relativ zu jeweiligen Seiten des Gehäuses (2) vertikal gleitfähig sind und an ihren unteren Enden mit einer Grundplatte (17) verbunden sind, wobei die Grundplatte mit einem Teil der Pumpe verbunden ist und dazu angeordnet ist, diesen Teil bei Betätigung des Betätigungsabschnitts des Griffs relativ zu dem anderen Teil der Pumpe anzuheben.

12. Spender nach einem der vorangehenden Ansprüche, wobei sich der Auslass (13) in der Basis des Spenders (1) befindet, so dass Flüssigkeit (12) von der Basis des Spenders nach unten gespendet werden kann, wobei die Basis des Spenders weiter Anbringmittel (30) zum Aufnehmen eines Halses (29) eines Gefäßes (28) und zum Halten des Gefäßes am Hals, während Flüssigkeit von dem Spender in das Gefäß gespendet wird, umfasst.

## Revendications

1. Distributeur de liquide portatif tenu à la main (1) permettant de distribuer des doses uniques ou multiples d'une quantité prédéterminée d'un concentré liquide (12), le distributeur comportant un boîtier (3) et une unité remplaçable (10),
le boîtier (2) comportant :
un compartiment (9) permettant de recevoir l'unité remplaçable (10) ;
une poignée (3) montée sur la partie supérieure du boîtier, la poignée comportant une partie fixe et une partie d'actionnement mobile (5) agencée par rapport à la partie fixe de sorte qu'une main portant le distributeur (1) par la poignée peut déplacer la partie d'actionnement par rapport à la partie fixe,
l'unité remplaçable (10) comportant :
un réservoir (11) pour le concentré liquide (12) ; et
une sortie pour liquide (13),
le distributeur de liquide étant **caractérisé en ce que** l'unité remplaçable comporte par ailleurs :
une pompe (14, 15) permettant de distribuer une quantité prédéterminée de liquide en provenance du réservoir au travers de la sortie et **en ce que** le distributeur de liquide comporte par ailleurs un mécanisme articulé (17, 18, 19) permettant de transférer le mouvement de la partie d'actionnement (5) à la pompe (14, 15) de l'unité remplaçable quand celle-ci est installée dans le compartiment du boîtier.

2. Distributeur selon la revendication 1, dans lequel la sortie pour liquide (13) est située au niveau de la partie inférieure du distributeur (1) quand l'unité remplaçable (10) est correctement positionnée dans le boîtier.

3. Distributeur selon la revendication 2, dans lequel la partie inférieure du distributeur (1) est agencée pour permettre de disposer le distributeur à la verticale sur une surface plate.

4. Distributeur selon la revendication 3, dans lequel le distributeur (1) a une partie de base généralement plate dans laquelle la sortie (13) est située.

5. Distributeur selon l'une quelconque des revendications précédentes, dans lequel la partie d'actionnement (5) de la poignée (3) a une partie linéaire agencée de manière sensiblement parallèle et adjacente par rapport à une partie linéaire de la partie fixe de la poignée, dans lequel la partie d'actionnement est actionnée et le liquide est distribué par une pression exercée sur la poignée (3).

6. Distributeur selon la revendication 5, dans lequel la partie d'actionnement (5) est située sous la partie fixe (4) et est sollicitée de manière élastique vers le bas à l'opposé de la position fixe.

7. Distributeur selon l'une quelconque des revendications précédentes, comportant un dispositif de verrouillage (6) agencé à des fins de verrouillage et de libération par une main portant le distributeur par la poignée, le dispositif de verrouillage, quand il est mis en prise, empêchant le fonctionnement de la partie d'actionnement (5).

8. Distributeur selon l'une quelconque des revendications précédentes, dans lequel l'unité remplaçable (10) et le boîtier (2) sont agencés de sorte que l'unité remplaçable est retenue dans le boîtier à la verticale, la pompe (14, 15) étant située sous le réservoir entre le réservoir et la sortie, la sortie étant formée par une ouverture dans la base du distributeur.

9. Distributeur selon l'une quelconque des revendications précédentes, dans lequel la pompe comporte une première partie (14) fixe par rapport au réservoir et une seconde partie (15) fixe par rapport à la sortie et agencées de sorte que tout mouvement relatif entre les deux parties de la pompe sur une étendue maximale admissible par la pompe entraîne la distribution d'une quantité prédéterminée de liquide (12) au travers de la sortie.

10. Distributeur selon la revendication 9, dans lequel la première partie (14) de la pompe comporte un moyen de mise en prise (16) à des fins de mise en prise avec un point fixe (21) du boîtier et la seconde partie de la pompe comporte un moyen de mise en prise (22) à des fins de mise en prise avec le mécanisme articulé (17, 18, 19), ou la première partie de la pompe comporte un moyen de mise en prise à des fins de mise en prise avec le mécanisme articulé et la seconde partie de la pompe comporte un moyen de mise en prise à des fins de mise en prise avec un point fixe du boîtier.

11. Distributeur selon la revendication 10, dans lequel le mécanisme articulé comporte deux montants verticaux (18, 19) s'étendant vers le bas depuis deux extrémités opposées de la partie d'actionnement (5) de la poignée (3), les montants étant en mesure de coulisser à la verticale par rapport à des côtés respectifs du boîtier (2) et étant connectés au niveau de leurs extrémités inférieures à une plate de base (17), la plaque de base étant connectée à une partie de la pompe et agencée pour faire monter cette partie par rapport à l'autre partie de la pompe lors du fonctionnement de la partie d'actionnement de la poignée.

12. Distributeur selon l'une quelconque des revendications précédentes, dans lequel la sortie (13) est située dans la base du distributeur (1) de sorte que le liquide (12) peut être distribué vers le bas depuis la base du distributeur, la base du distributeur comportant par ailleurs un moyen de montage (30) à des fins de réception d'un col (29) d'un contenant (28) et à des fins de support du contenant par le col alors que le liquide est distribué dans le contenant en provenance du distributeur.
